Europäisches Patentamt

European Patent Office

Office européen des brevets

(19)

(11) EP 0 489 580 B1

(12) EUROPEAN PATENT SPECIFICATION

(45) Date of publication and mention
of the grant of the patent:
**28.02.1996 Bulletin 1996/09**

(51) Int Cl.$^6$: **G02B 21/00**

(21) Application number: 91311256.1

(22) Date of filing: **03.12.1991**

(54) **Confocal laser scanning differential interference contrast microscope**

Konfokales Laser-Abtastmikroskop mit Kontrast durch Differenz aus Interferenzsignalen

Microscope confocal à balayage laser de contraste d'interférence différentielle

(84) Designated Contracting States:
DE FR GB

(30) Priority: **03.12.1990 JP 400212/90**
**27.03.1991 JP 63107/91**

(43) Date of publication of application:
**10.06.1992 Bulletin 1992/24**

(73) Proprietor: **NIKON CORPORATION**
**Tokyo (JP)**

(72) Inventors:
• **Oki, Hiroshi**
**Midori-ku, Yokohama-shi, Kanagawa-ken (JP)**

• **Iwasaki, Jun**
**Sakae-ku, Yokohama-shi, Kanagawa-ken (JP)**

(74) Representative: **Burke, Steven David et al**
**R.G.C. Jenkins & Co.**
**26 Caxton Street**
**London SW1H 0RJ (GB)**

(56) References cited:
**EP-A- 0 274 155**       **WO-A-89/06813**

• **PATENT ABSTRACTS OF JAPAN vol. 15,no. 23 (P-1155)(4551) 18 January 1991 & JP-A-2 267 513**
• **OPTICS COMMUNICATIONS, vol. 85, no. 2/3, 1 September 1991, Amsterdam, NL, pp. 177-182; OOKI et al.: 'A novel type of laser scanning microscope: theoretical considerations'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

Field of the Invention

This invention relates to a confocal laser scanning differential interference contrast microscope.

Related Background Art

A confocal laser scanning microscope has the advantage that its depth of focus is very shallow and has various applications. Specifically, it has a laser source, an illuminating optical system for condensing a light beam from the laser source on an object to be examined and forming a light spot, a condensing optical system for condensing a light beam from the object to be examined on a detecting surface, detecting means for detecting the light beam condensed on the detecting surface, and scanning means for moving the light spot relative to the object to be examined, and condenses the laser beam on the object to be examined and detects the light on the detecting surface as well through a pin-hole opening.

To obtain a differential interference contrast image by the use of such a confocal laser scanning microscope, use can be made of the construction of a differential interference device in a conventional popular optical microscope. However, this is a complicated construction and moreover, requires a special objective lens of little distortion, a Nomarski prism, a wavelength plate, etc. and therefore, the manufacture of various optical elements at high accuracy is difficult, and this has led to the expensiveness of the apparatus.

The document JP-A-02 267 513 discloses a confocal laser scanning microscope using waveguides on a substrate.

SUMMARY OF THE INVENTION

According to one aspect of the present invention, there is provided a confocal laser scanning differential interference contrast microscope comprising a laser source; optical illuminating means for condensing a light beam from said laser source and forming a light spot on an object to be examined; optical condensing means for condensing the light beam from said object to be examined on a detecting surface; a detecting device for detecting the light beam condensed on said detecting surface, the detecting device comprising light detecting means and a substrate having channel waveguide means; scanning means for moving said object to be examined and said light spot relative to each other; and signal processing means for producing information on said object to be examined by the detection signals of said detecting means; characterised in that said channel waveguide means of said detecting device has a double mode channel waveguide which has an entrance end on said detecting surface in which an even mode and an odd mode can be excited at the wavelength of the light incident on the entrance end surface and in which the excited modes are propagable, and a waveguide fork at which said double mode channel waveguide forks into first and second waveguide fork branches ; and in that said detecting device includes two detecting elements for detecting light propagated through said first and second waveguides fork branches respectively, and said signal processing means includes differential means for producing differential information on the object to be examined by outputting the difference between the signals from said detecting elements.

Embodiments of the present invention may provide a confocal laser scanning differential interference contrast microscope which is compact and easy to manufacture.

For the above, the present invention uses a waveguide device and obtains a differential interference contrast image by a principle entirely differing from the conventional construction.

That is, in a confocal laser scanning microscope, a substrate formed with a channel waveguide is provided on light detecting means, and said channel waveguide has a double mode waveguide region having an entrance end surface on said detecting surface and a waveguide fork which forks said double mode waveguide into two single mode waveguides, and is further provided with detecting elements for detecting light propagated through the two single mode waveguides.

According to another aspect of the present invention, there is provided a confocal laser scanning differential interference contrast microscope comprising: a substrate formed with channel waveguide means; a laser source for supplying a laser beam through said channel waveguide; optical illuminating means for condensing the laser beam passed through said channel waveguide to form a light spot on an object to be examined, and condensing light reflected from said object to be examined on an end surface of said channel waveguide; light detecting means for detecting light from said object to be examined passing through said channel waveguide; scanning means for moving said object to be examined and said light spot relative to each other; and signal processing means for producing information on said object to be examined by the detection signals of said detecting means; characterised in that said channel waveguide means comprises a double mode channel waveguide which has an entrance end at said end surface and in which an even mode and an odd mode can be excited at the wavelength of the light incident on the end surface and the excited modes are propagable, and a waveguide fork at which said double mode waveguide forks into first, second and third waveguide fork branches ; in that said light detecting means includes first and second light detecting elements corresponding to the outer two of said waveguide fork branches ; and in that said signal processing means is arranged to produce differential information of said object from the detection signals of said detecting elements.

In a confocal laser scanning microscope of the so-called fall illumination type using a common objective lens for an illuminating optical system and a condensing optical system, it is possible to provide a waveguide for illumination on the waveguide substrate of detecting means to thereby make them integral with each other. In this case, it is preferable that the channel waveguide on the substrate be made into a construction having a double mode waveguide region having an end surface on said detecting surface and a waveguide fork which forks said double mode waveguide into three single mode waveguides, and an illuminating light beam from a laser source be directed to the middle one of the three single mode waveguides to thereby form a light spot on an object to be examined through an objective lens and provision be made of detecting elements for detecting lights propagating through the two outer ones of the three single mode waveguides.

In embodiments of the present invention, a laser spot reflected by the object to be examined becomes a spot image again on the detecting surface by a condensing optical system comprising an objective lens, an imaging lens, etc. When at a position whereat this spot image is formed, the double mode channel waveguide is disposed so that the center of the spot image and the center of the double mode channel waveguide may coincide with each other, if the amplitude distribution of the spot image in the widthwise direction of the waveguide is an even function when the center of the spot is the origin, only an even mode is excited in the double mode waveguide. In the other cases, both of even and odd modes are excited. If a waveguide fork region forking into single mode channel waveguides is provided subsequently to the double mode region, when only the even mode is excited, equal quantities of light are distributed in the two forks, and in the other cases, the interference between the even mode and the odd mode occurs and therefore, the quantities of light distributed in the two forks are generally not equal. Generally, if in the object to be examined, there are inclinations, i.e., a physical inclination as well as all inclinations such as refractive index inclinations which vary the length of the optical path and the inclination of light transmittance distribution or light reflectance distribution, the amplitude distribution of the spot image will have an odd function component and at this time, both of even and odd modes will be excited in the double mode waveguide and as a result, the quantities of light distributed into the two forks will become equal. Accordingly, by detecting the difference between the quantities of light propagating through the two forks, the microscopic inclination of the object to be examined can be detected.

Let it be assumed that the angle of inclination of the object to be examined is $\theta$ and $\sin\theta = \alpha$. If the amplitude distribution of the laser spot when the inclination is 0 is $u(x)$ and the field distribution of each eigen mode of the double mode waveguide is $fe(x)$ and $fo(x)$ with respect to the even and odd modes, respectively, $u(x)$ and $fe(x)$ are even functions and $fo(x)$ is an odd function. With $k = 2\pi/\lambda$ ($\lambda$: wavelength), the amplitude distribution of the laser spot $u\alpha(x)$ when there is an inclination is expressed as

$$u\alpha(x) \simeq u(x)\exp(ik\alpha x)$$
$$= u(x)[\cos(k\alpha\,x) + i\sin(k\alpha x)]. \tag{1}$$

Here, the coupling efficiency $\eta_e$ of the even mode is

$$\eta_e = \frac{\int u(x)\cos(k\alpha x)fe^*(x)dx}{\sqrt{\int |u(x)|^2 dx \int |fe(x)|^2 dx}}, \tag{2}$$

while the coupling efficiency $\eta_o$ of the odd mode is

$$\eta_o = \frac{i\int u(x)\sin(k\alpha x)fo^*(x)dx}{\sqrt{\int |u(x)|^2 dx \int |fo(x)|^2 dx}}. \tag{3}$$

If the integration range is suitably chosen and $|k\alpha x| << 2\pi$ within this range,

$$\cos(k\alpha x) \simeq 1,\ \sin(k\alpha x) \simeq k\alpha x$$

and hence, from the fact that $u(x)$, $fo(x)$ and $fe(x)$ are predetermined functions, it can be seen that

$$\eta_e \simeq \text{constant},\ \eta_o \propto i\alpha. \tag{4}$$

If $C_1$ and $C_2$ are real constants and $\phi$ is the phase difference between the even and odd modes at the point of branch-off, the variation in the intensity of light by the interference between the even mode and the odd mode is

$$I \propto |\eta_e \pm i\eta_o \exp\{i\phi\}|^2 = |C_1 \pm i\alpha C_2 \exp\{i\phi\}|^2. \tag{5}$$

Consequently, if $\exp\{i\phi\}$ is selected to $\exp\{i\phi\} = \pm i$, equation (5) substantially becomes

$$I = C_1^2 \mp 2\alpha C_1 C_2 \qquad (6)$$

and a variation in the intensity proportional to $\alpha$ is obtained, and a so-called differential image can be obtained.

Accordingly, to obtain such a differential image, it is necessary that at the point of branch-off between the double mode and the single mode, a phase difference an odd number times as great as 90° be brought about between the two modes. For this reason, the well-known fully coupled length of the two modes (the length for which the phase difference between the even and odd modes is 180°) is Lc, it is preferable that the length L of the double mode region be

$$L = Lc(2m+1)/2. \ (m = 0, 1, 2, ...) \qquad (7)$$

Note that expression (1) takes the inclination of the object into consideration and thus, supposes a phase object. The present invention is applicable not only to a phase object, but also an intensity modulation object (an object of which the light transmittance or reflectance varies). Such an object, for example, with $\alpha$ as a real number, can be expressed as

$$u\alpha \ (x) = u(x)(1 + \alpha x). \qquad (8)$$

At this time, obviously,

$$\eta_e \simeq \text{constant}, \ \eta_o \propto \alpha \qquad (9)$$

and hence, it is when there is brought about a phase difference integer times as great as 180° between the two modes, that is, when $\exp\{i\phi\} = \pm 1$ is placed in equation (5), that the ratio of quantity of light distributed in the two forks becomes greatest by the interference between the even and odd modes.

Consequently, to see the differential image of an intensity modulation object, it is preferable that the length L of the double mode region be integer times as great as the coupled length Lc, i.e.,

$$L = mLc. \ (m = 1, 2, ...) \qquad (10)$$

That is, depending on how the length L of the double mode region is assumed, the differential image of only the phase modulating portion or the intensity modulating portion of the object can be seen.

Where the substrate has an electro-optical effect, a voltage can be applied to the double mode region through an electrode disposed on this region, thereby varying the fully coupled length Lc. Accordingly, even if the length of the double mode region is a predetermined value L, it is possible to satisfy both of equation (7) and equation (10) above by the adjustment of the voltage, and it is possible to make the mechanical length of the double mode region constant and yet obtain the phase information and amplitude information of the object independently of each other by the electro-optical effect.

That is, by applying a voltage to the electrode disposed on the double mode region of the channel waveguide, the fully coupled length Lc in the double mode region can be varied into $Lc_1$ and $Lc_2$, and by adopting a construction in which for the predetermined length L of the double mode region,

$$\left. \begin{array}{ll} L \cong mLc_1 & (m = 1, 2, ...) \\ L \cong Lc_2(2m+1)/2 & (m = 0, 1, 2, ...) \end{array} \right\} \quad (11)$$

is established, in the case of $Lc_1$, the amplitude information of the object can be obtained as shown in equation (10) above, and in the case of $Lc_2$, the phase information of the object can be obtained as shown in equation (7) above.

By the principle of the differential interference contrast microscope using the channel waveguide as described above, it is possible to obtain the differential information in the widthwise direction of the double mode channel waveguide, but the direction of the differential information is restricted to this direction. So, by combining two detecting means so that the widthwise directions of the double mode waveguides thereof may be orthogonal to each other, it becomes possible to obtain differential information in a desired direction without rotating the object to be examined and the microscope relative to each other. That is, the differential information in the directions orthogonal to each other can be obtained from each detecting means, and by combining the signals from the two detecting means, it becomes possible to observe the differential image as a contrast difference in any direction.

Specifically, when the signals obtained in the first and second detecting means are $I_1$ and $I_2$, respectively, and if the combined signal of the two is I, signal processing is effected such that

$$I = I_1 \sin\theta + I_2 \cos\theta. \qquad (12)$$

Here, by varying $\theta$ within the range of $0\text{-}\pi$, the direction in which the contrast of the differential image is created can be changed, and a differential image having a contrast in a desired direction can be obtained without the sample and the microscope being rotated relative to each other. In practical use, it is preferable to suitably vary the value of said $\theta$ and choose such a value of $\theta$ that the differential image of the object to be examined can be expressed most accurately while observing the monitor image as the confocal laser scanning microscope.

BRIEF DESCRIPTION OF THE DRAWINGS

Figure 1 schematically shows the construction of a first embodiment of the present invention.

Figure 2 schematically shows the construction of a second embodiment of the present invention.

Figure 3 schematically shows the construction of a third embodiment of the present invention.

Figure 4 schematically shows the construction of a fourth embodiment using a substrate on which electrodes are provided.

Figure 5 schematically shows the construction of a fifth embodiment using a substrate on which electrodes are provided.

Figure 6 schematically shows the construction of a sixth embodiment in which two detecting means are combined.

Figure 7 schematically shows the construction of a seventh embodiment in which two detecting means are combined.

DESCRIPTION OF THE PREFERRED EMBODIMENTS

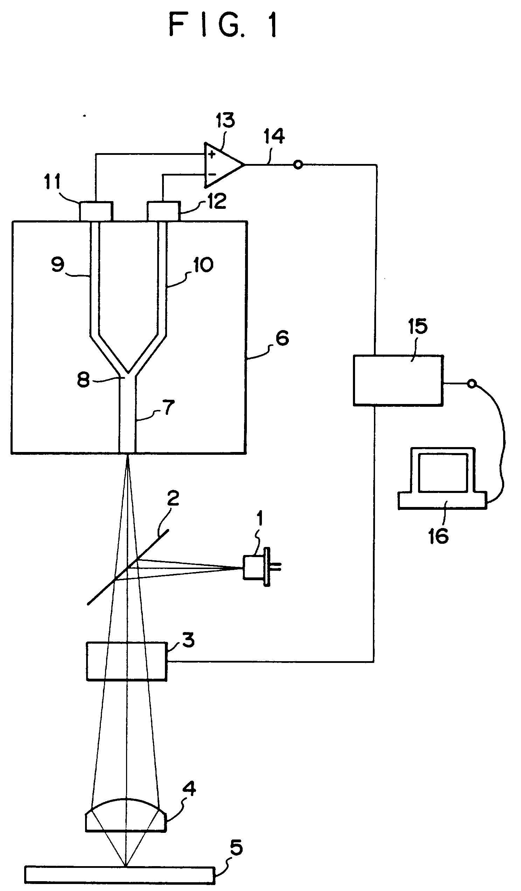

Figure 1 schematically shows the construction of a first embodiment of the present invention. Light emitted from a semiconductor laser source 1 is reflected by a half mirror 2, enters an objective lens 4 via well-known X-Y two-dimensional scanning means 3 and is condensed on an object surface 5. The light reflected by the object surface 5 and transmitted through the half mirror 2 again via the objective lens 4 and the X-Y two-dimensional scanning means 3 is condensed on a detecting surface on which is disposed the entrance end surface of a channel waveguide 7 formed on a substrate 6. The channel waveguide 7 is a double mode waveguide, and the light propagated through the double mode waveguide 7 soon reaches a branch-off region 8 and has its power distributed into two single mode waveguides 9 and 10, and arrives at two photodetectors 11 and 12 joined to the substrate 6. The entrance end of the channel waveguide 7 performs a function similar to that of a pin-hole and therefore, this construction constitutes a confocal laser scanning microscope. The half mirror 2 and the objective lens 4 together form an illuminating optical system, and the objective lens 4 forms a condensing optical system.

When as previously described, there is an inclination at a point on the object 5 illuminated by the laser spot, there is created an inclination in the phase distribution of the laser spot imaged on the entrance end of the channel waveguide 7. By this inclination, even and odd modes are excited in the double mode waveguide 7, and the ratio of light powers arriving at the two photodetectors 11 and 12 is varied by the interference between the two modes. Consequently, the differential signal 14 of the outputs of the two detectors 11 and 12 is taken by differential detecting means 13, whereby minute unevenness of the object surface can be detected. At this time, the length L of the double mode region, with the fully coupled length as Lc, can be

$$L = Lc\,(2m+1)/2 \qquad (m = 0, 1, 2, ...)$$

and this construction provides a differential interference system as already described. Specifically, by control means 15 for memorizing the differential signal 14 from the X-Y two-dimensional scanning means 3 correspondingly to the position of the light beam on the object to be examined and making it into an image, a differential interference image can be displayed on a monitor 16.

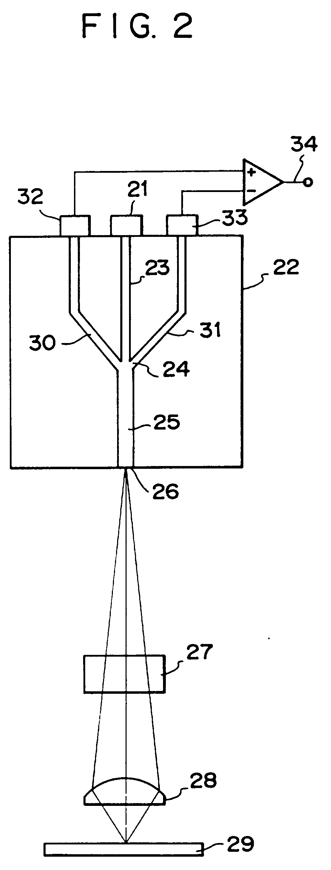

Figure 2 schematically shows the construction of a second embodiment of the present invention. In this construction, an objective lens 28 is used in common for an illuminating optical system and a condensing optical system, and a portion of a waveguide for detection has also the function of an illuminating system for directing a laser beam. A laser source 21 is a semiconductor laser, and is fixed to a substrate 22 so that the light coupling efficiently may be greatest relative to a single mode channel waveguide 23 formed on the substrate 22. The laser beam which has entered the waveguide 23 is propagated through a double mode waveguide 25 via a fork 24. In the fork 24 of the waveguide, three single mode waveguides are coupled to the double mode waveguide 25, and the middle single mode waveguide 23 is used for illumination and the outer two single mode waveguides are used for detection which will be described later. At this time, by providing such a positional relation that the center line of the middle single mode channel waveguide 23 and the center line of the double mode waveguide 25 coincide with each other, the light entering the double mode waveguide 25 from the middle single mode channel waveguide 23 excites only the even mode in the double mode waveguide 25. Accordingly, the laser beam virtually emerges from an end surface 26 in a single mode state.

The illuminating light beam emerging from the end surface of the double mode waveguide 25 enters an objective lens 28 via X-Y two-dimensional scanning means 27 and is condensed on an object surface 29. The light beam reflected by the object surface 29 and thereafter passed again through the objective lens 28 and the X-Y two-dimensional scanning means 27 is condensed on a detecting surface 26 on which is disposed the end surface of the channel waveguide 25 formed on the substrate 22, and a laser spot is formed thereon. Therefore, as in the first embodiment, the power ratio distributed into two single mode channel waveguides 30 and 31 changes with the inclination of the object surface, and if the light from the waveguides 30 and 31 is detected by photodetectors 32 and 33 fixed to the substrate 22 and the differential signal 34 thereof is taken, there will be obtained a differential interference signal. In Figure 2, control means for making the differential signal 34 into an image by a signal from the X-Y two-dimensional scanning means 27 and a monitor are the same as those in the first embodiment shown in Figure 1 and therefore are not shown.

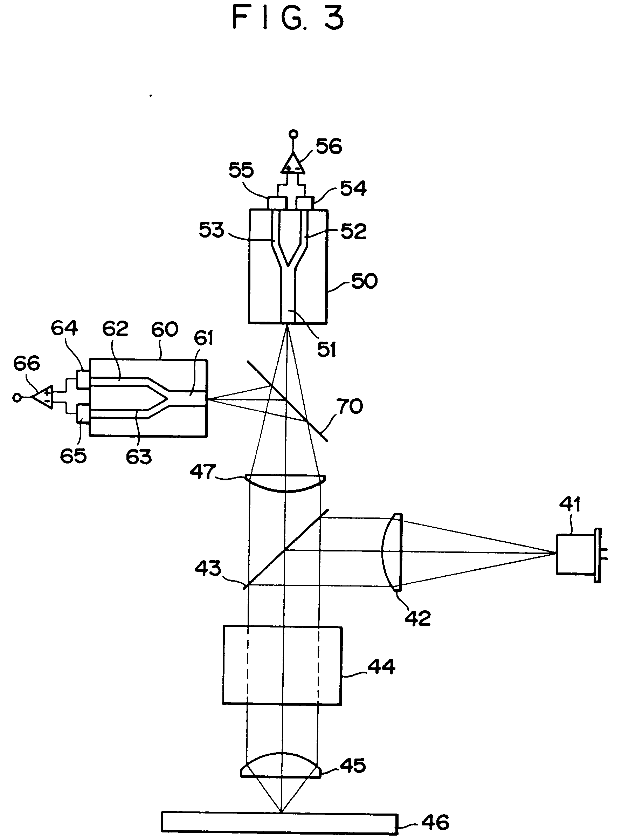

Figure 3 schematically shows the construction of a third embodiment of the present invention. A light beam from a laser source 41 is converted into a parallel light beam by a collimator lens 42 and is reflected by a half mirror 43, whereafter it is condensed on an object 46 to be examined by an objective lens 45 via X-Y two-dimensional scanning means 44. The reflected light from the object 46 to be examined is subjected to the condensing action of the objective lens 45, and is transmitted through the X-Y two-dimensional scanning means 44 and the half mirror 43 and directed to detecting means. In the construction of this third embodiment, two waveguide devices 50 and 60 are used as detecting means, and a half mirror 70 for supplying the reflected light from the object to each waveguide device is disposed. Of course, the half mirror 70 may be a pivotable mirror or a removably mounted reflecting mirror. On the respective waveguide devices, as on the waveguide device formed on the substrate 6 in the first embodiment shown in Figure 1, there are provided double mode waveguides 51, 61 and two single mode waveguides 52, 53 and 62, 63 branching off subsequently thereto, and photodetectors 54, 55 and 64, 65 are joined to the exit ends of the respective single mode waveguides. As in the construction of Figure 1, there are provided differential detecting means 56 and 66 for obtaining the differential signal of the signals from the respective photodetectors.

What is important here is the lengths $L_1$ and $L_2$ of the double mode waveguide regions 51 and 61, respectively, in the first waveguide device 50 and the second waveguide device, 60, respectively. If with the fully coupled length of the even mode and the odd mode as Lc, $L_1$ and $L_2$ are chosen to be

$$L_1 = mLc \qquad (m = 1, 2, ...)$$

$$L_2 = Lc\,(2m+1)/2, \quad (m = 0, 1, 2, ...)$$

A phase difference integer times as great as 180° is brought between the double mode and the single mode from the output of the first waveguide device 50 and therefore, the differential image of the intensity distribution of the object can be taken out, and since a phase difference odd number times as great as 90° is brought between the two modes from the output of the second waveguide device 60, the differential image of the phase distribution of the object can be taken out. Again in the construction of Figure 3, the control means and the monitor are the same as those in the first embodiment shown in Figure 1 and therefore are not shown.

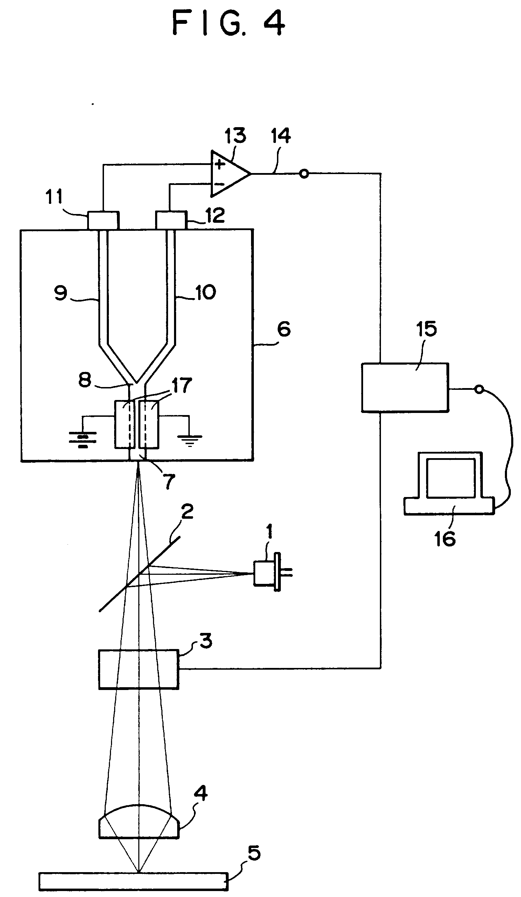

A fourth embodiment shown in Figure 4 is such that in the construction of the first embodiment shown in Figure 1, the substrate has an electro-optical effect and electrodes 17 are provided in the double mode channel waveguide region. By changing the voltage applied to this electrodes 17, it becomes possible to arbitrarily change the fully coupled length in the double mode channel waveguide, and by satisfying any one relation shown in expression (11) above, it becomes possible to obtain the amplitude information and phase information of the object independently of each other.

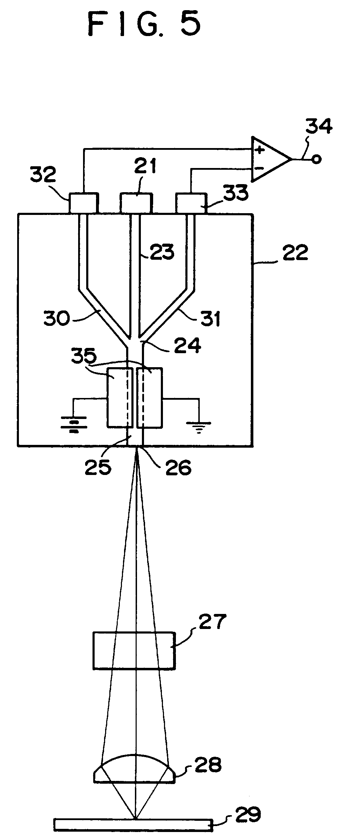

The construction of a fifth embodiment shown in Figure 5 is such that in the construction of the second embodiment shown in Figure 2, the substrate likewise has an electro-optical effect and electrodes 35 are provided in the double mode channel waveguide region. Again in this construction, by changing the voltage applied to the electrodes 35, it becomes possible to obtain the amplitude information and phase information of the object independently of each other.

In the fourth and fifth embodiments described above, each two electrodes 17 and 35 for applying a voltage to the double mode waveguides 7 and 25, respectively, are arranged symmetrically with respect to the waveguides 7 and 25, respectively, but depending on the state of the substrate used (in the case of a crystal substrate, the direction or the like of the crystal axis), the electrode arrangement as shown in Figures 4 and 5 is not always optimal.

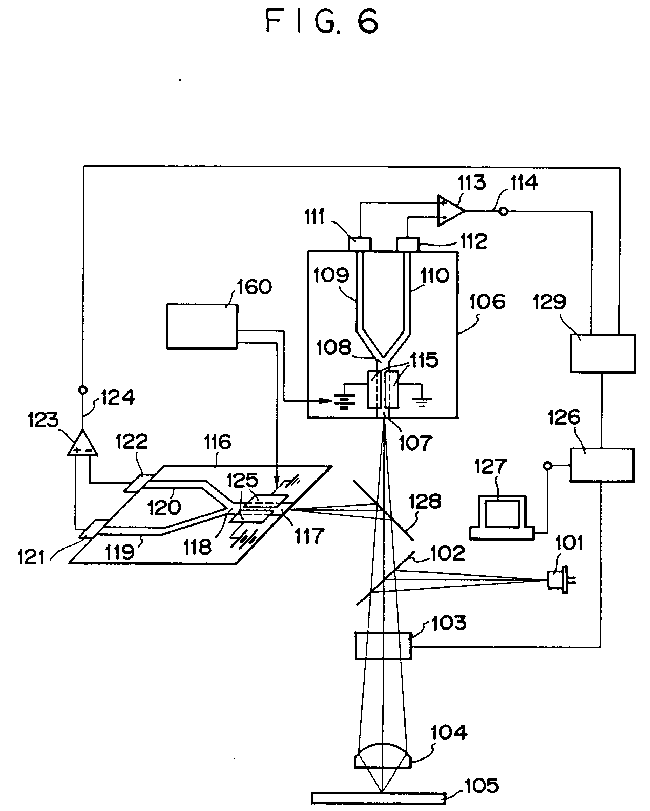

Figure 6 schematically shows the construction of a sixth embodiment of the present invention. In this embodiment, by combining two detecting means, it is made possible to detect the differential information of the object to be examined in any direction.

As shown in Figure 6, light emitted from a semiconductor laser source 101 is reflected by a half mirror 102, enters an objective lens 104 via well-known X-Y two-dimensional scanning means 103 and is condensed on an object surface 105. The light reflected by the object surface 105 and thereafter again passed through the objective lens 104 and the X-Y two-dimensional scanning means 103 and transmitted through the half mirror 102 is caused to branch off to two optical paths by a second half mirror 128. The light transmitted through the second half mirror 128 is condensed on the entrance end surface of a channel waveguide 107 formed on a first substrate 106 which constitutes first detecting means. Also, the light reflected by the second half mirror 128 is condensed on the entrance end surface of a channel waveguide 117 formed on a second substrate 116 which constitutes second detecting means. The first substrate 106 and the second substrate 116 are equivalent substrates both having an electro-optical effect. The channel waveguide 107 formed on the first substrate 106 is a double mode waveguide comprising electrodes 115 disposed on a substrate, and the light propagated through the double mode waveguide 107 soon arrives at a branch-off region 108 and its power is distributed into two single mode waveguides 109 and 110, and the light passes to two photodetectors 111 and 112 joined to the substrate 106.

Likewise, the channel waveguide 117 formed on the second substrate 116 is a double mode waveguide comprising electrodes 125 disposed on a substrate, and the light propagated through the double mode waveguide 117 arrives at a branch-off region 118 and its power distributed into two single mode waveguides 119 and 120, and the light arrives at two photodetectors 121 and 122 joined to the substrate 116. Since the entrance ends of the channel waveguides 107 and 117 perform a function similar to that of a pin-hole, this construction constitutes a confocal laser scanning microscope. The half mirror 102 for illumination and the objective lens 104 together form an illuminating optical system, and the objective lens 104 forms a condensing optical system.

When as previously described, there is an inclination or a gradient of reflectance at a point on the object 105 illuminated by the laser spot, an inclination is created in the phase distribution or intensity distribution of the laser spot imaged on the entrance ends of the channel waveguides 107 and 117, and the direction thereof corresponds to the widthwise direction of each double mode region. By the inclination in the widthwise direction of each double mode region, even and odd modes are excited in the double mode waveguides 107 and 117, respectively, and the ratio of the light powers arriving at the two pairs of photodetectors 111, 112 and 121, 122 is varied by the interference between the two modes. Consequently, by taking the differential signals 114 and 124 of the outputs of the pairs of detectors 111, 112 and 121, 122 by differential detecting means 113 and 123, a minute level difference or a variation in reflectance on the object surface can be detected with respect to each direction.

At this time, the length L of the double mode region, with the fully coupled length as Lc, when the phase distribution of the object is observed, can be

$$L = Lc\,(2m+1)/2,\ (m = 0, 1, 2, ...)$$

and when the intensity distribution of the object is observed, can be

$$L = mLc,\ (m = 1, 2, ...)$$

and this construction provides a differential interference system, as described above.

The substrates 106 and 116 each has an electro-optical effect and therefore, if the voltage applied to the electrodes 115 and 125 is varied, the fully coupled length Lc can be varied. Consequently, the above two conditions are established relative to the length L of the same double mode region by adjusting the voltage applied to the electrodes 115 in the first substrate 106. That is, the phase distribution and the intensity distribution of the object can be detected indepedently of each other by one waveguide device. A similar action becomes possible by adjusting the voltage applied to the electrodes 125 in the second substrate 116, but since the widthwise direction of the double mode region 117 is perpendicular to that of the first substrate 106, the direction in which there is created the contrast of the obtained signals of the phase distribution and intensity distribution is orthogonal to the direction in which a contrast is created by the signals obtained in the substrate 106. As described above, by signal-processing the differential signals 114 and 124 obtained by the two substrates 106 and 116, there can be obtained a differential interference image having a contrast in a desired direction.

Specifically, when the differential signals 114 and 124 are said $I_1$ and $I_2$, respectively, signal processing means 129 processes so that the combined signal I of the two may be given by equation (12) above. Control means 126 can memorize the output from the signal processing means 129 correspondingly to the position of the light beam on the object to be examined from the X-Y two-dimensional scanning means 103 and convert this output into image information, and display a desired differential interference image on a monitor 127. Here, for the signal processing means 129, $\theta$ can be arbitrarily varied within the range of $0 - \pi$, and by suitably varying this $\theta$, the direction in which the contrast of the differential image is created can be arbitrarily changed.

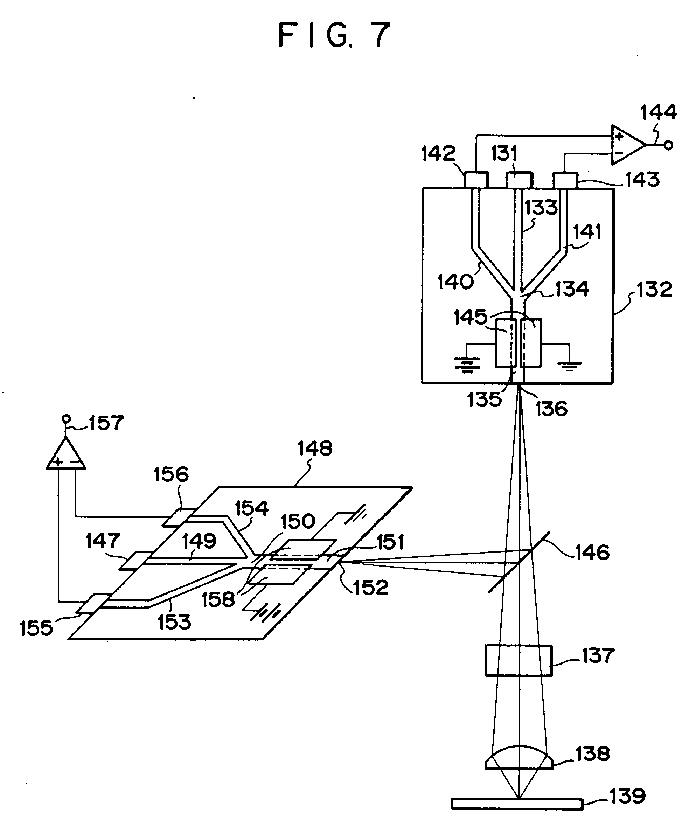

Figure 7 schematically shows the construction of a seventh embodiment of the present invention. This construction, like that shown in Figure 6, is a construction of the coaxial fall type in which an objective lens 138 is used in common for an illuminating optical system and a condensing optical system, but a portion of a waveguide in two detecting means has also the function of an illuminating system for directing a laser beam. With regard to a first substrate 132 which constitutes first detecting means, a laser source 131 is a semiconductor laser and is fixed to the substrate 132 so that the light coupling efficiency may be greatest for a single mode channel waveguide 133 formed on the substrate 112 having an electro-optical effect. The laser beam which has entered the waveguide 133 is propagated via a fork 134 through a double mode waveguide 135 comprising electrodes 145 disposed on the surface of substrate. In the fork 134 of the waveguide, three single mode waveguides are coupled to a double mode waveguide 135, and the middle single mode waveguide 133 is used for illumination and the outer two single mode waveguides 140 and 141 are used for detection which will be described later.

By providing such a positional relation that the center line of the middle single mode channel waveguide 133 and the center line of the double mode waveguide 135 coincide with each other, the light entering the double mode waveguide 135 from the single mode channel waveguide 133 excites only the even mode in the double mode waveguide 135. Accordingly, the laser beam virtually emerges from an end surface 136 in a single mode state.

A second substrate 148 which constitutes second detecting means is constructed similarly to the substrate 132, and a laser beam from a semiconductor laser 147 is propagated through a single mode waveguide 149 via a fork 150 and through a double mode waveguide 151, and emerges from an end surface 152 in a single mode state.

The illuminating light beam emerging from the end surfaces of the double mode waveguides 135 to 151 passes through a half mirror 146 to an objective lens 138 via X-Y two-dimensional scanning means 137, and is condensed on an object surface 139. The light beam reflected by the object surface 139 and thereafter again passed through the objective lens 138 and the X-Y two-dimensional scanning means 137 passes through a half mirror 146 and a part of this light beam arrives at the first substrate 132 of the first detecting means and the remainder arrives at the second substrate 148 of the second detecting means. The light beam is condensed on the end surfaces (detecting surfaces) of the double mode waveguides 135 and 151 formed on the respective substrates, and laser spots are formed thereon. Thereafter, as in the first embodiment, the ratio of powers distributed into the outer two single mode channel waveguides 140, 141 and 153, 154 of the three single mode waveguides in the respective substrates changes with the inclination of the object surface, and if the lights from the waveguides 140, 141 and 153, 154 are detected by photodetectors 142, 143 and 155, 156 fixed to the substrates 132 and 148, respectively and differential signals 144 and 157 are taken, there are obtained differential interference signals by the respective detecting means.

Again in this construction, the substrates 132 and 148 each have an electro-optical effect and therefore, if the voltage applied to the electrodes 145 and 158 is varied, the fully coupled length Lc can be varied and the phase distribution and intensity distribution of the object can be detected independently of each other by one waveguide device. Likewise, the widthwise direction of the double mode waveguide 135 in the first substrate 132 is perpendicular to the widthwise direction of the double mode waveguide 151 in the second substrate 148 and therefore, the directions in which there are created the contrasts of the obtained signals of the phase distribution and intensity distribution are also orthogonal to each other, and by signal-processing differential signals 144 and 157, there is obtained a differential interference image having a contrast in a desired direction.

In Figure 7, signal processing means for the differential signals 144 and 157, control means for making the differential signals into an image by a signal from the X-Y two-dimensional scanning means and a monitor are the same as those in the sixth embodiment shown in Figure 6 and therefore are not shown.

In the construction shown in Figure 7, illuminating lights are supplied from the laser sources 131 and 147 in both of the two substrates 132 and 148, but since an illuminating light can be supplied from only one of the two laser sources, the other laser source is not always necessary. In such case, it will become possible to replace one of the substrates 132 and 148 of the two detecting means shown in Figure 7 with the substrate 106 or 116 shown in Figure 6. Where laser sources are provided on both substrates, if a laser beam is supplied from only one of the laser sources and switching is made to the other laser source when one laser source goes wrong, it will become possible to continue the operation of the microscope without interchanging the laser sources.

Also, in the sixth and seventh embodiments described above, there is adopted a construction in which the differential signals from the two detecting means are combined and image-processed, but it is also possible to design such that by displaying the differential signals from the two detecting means on discrete monitors, the differential images of the object in a certain direction and a direction orthogonal thereto are observed discretely from each other.

Description will now be made of suitable materials for forming the channel waveguides in the construction of each of the above-described embodiments. Soda glass, Pyrex and molten quartz are known as waveguide substrate, but these have no electro-optical effect, and it is difficult to construct a laser diode as a light source and a light receiving element integrally and monolithically. Where use is made of $LiNbO_3$, $LiTaO_3$, GaAs or InP as a substrate, it is possible to form an electrode on the basis of the electro-optical effect of these materials to thereby change the fully coupled length Lc of the double mode waveguide region, and by GaAs and InP, a laser diode LD and a detecting element can be made monolithically integral with each other. When Si is used for a substrate, it is possible to make light receiving elements integral with each other. Including these, the materials of substrates and waveguide layers for forming channel waveguides usable in the present invention can be pigeonholed as follows, and it is preferable to use suitable materials on the basis of the characteristics of the materials.

[Table]

| | Waveguide Structure | |
|---|---|---|
| | Substrate | Waveguide layer |
| Materials capable of forming electrodes | $LiNbO_3$ | Ti-diffused $LiNbO_3$ <br> Proton exchange $LiNbO_3$ <br> ($H_xLi_{1-x}NbO_3$) |
| | $LiTaO_3$ | Nb-diffused $LiTaO_3$ <br> Cu-diffused $LiTaO_3$ <br> $LiNbO_3$ |
| | $Al_2O_3$ | PLTZ |

Continuation of the Table on the next page

[Table] (continued)

| | Waveguide Structure | |
| --- | --- | --- |
| | Substrate | Waveguide layer |
| Materials capable of making light receiving elements integral | $SiO_2/Si$ | bariumborosilicate glass<br>$Si_3N_4$<br>ZnO<br>$Nb_2O_5$<br>$Ta_2O_5$<br>$(SiO_2)_x$-$TaO_{2y}$ |
| Materials capable of forming electrodes and making LD and light receiving elements integral | GaAs | $Ga_{1-x}Al_xAs$ |
| | InP | $In_xGa_{1-x}AsPy$ |
| Materials incapable of forming electrodes and making LD and light receiving elements integral | Soda glass | ion exchange glass<br>polyurethane<br>epoxy<br>photoresist |
| | Pyrex | bariumborosilicate glass |
| | Molten quartz | PMMA<br>photopolymer |

Now, each of the above-described embodiments uses an objective lens in common for the illuminating optical system and the condensing optical system, and constitutes a microscope of the so-called fall illumination type, but of course, the present invention may also be constructed as a so-called transmission type microscope in which an illuminating optical system is disposed on one side of an object to be examined and a condensing optical system is disposed on the other side.

Further, in each of the above-described embodiments, the laser source and photodetectors are exteriorly disposed relative to the waveguide device, but if a silicon substrate is used, the photodetectors can be constructed on the same substrate as the waveguide device, and if a compound semiconductor substrate such as gallium arsenide, both of the laser source and the photodetectors can be monolithically integrated on the same substrate as the waveguide, whereby the compactness, light weight and energy saving for adjustment of the apparatus can be further put forward. However, where it is difficult to construct the laser source and photodetectors integrally with the waveguide device, these may be separately disposed and design may be made such that light is directed by optical fiber or a lens system.

The double mode waveguide may be replaced by two single mode waveguides disposed proximately to each other. Further, of course, by applying suitable processing to the differential signal from the light detecting element which detects the intensity of light passing through the two single mode waveguides, there can be obtained images having various contrasts.

In each of the above-described embodiments, a construction in which a light spot is scanned on the object to be examined by an X-Y two-dimensional scanner such as a vibratory mirror or a rotatable mirror is adopted as means for moving the object to be examined and the light spot relative to each other, but alternatively, it is possible to adopt a construction in which the light spot is fixed and a stage on which the object to be examined is placed is scanned. Where the light beam in the optical system is vibrated by a vibratory mirror, a rotatable mirror or the like and the light spot is scanned, it may be impossible due to the influence of the residual aberrations of the optical system to strictly maintain the conjugate relation between the light spot on the object to be examined and the light spot condensed on the light receiving surface of the detecting means (the end surface of the double mode waveguide region), and in such a case, it is preferable to resort to the scanning of the stage.

As described above, according to the present invention, neither any special objective lens nor any special optical element such as a Nomarski prism or a wavelength plate is necessary, and on the basis of a new principle using waveguides, there can be provided a confocal laser scanning differential interference contrast microscope having a compact and simple construction. Also, the construction of the second embodiment shown in Figure 2 has the advantage that the alignment of the laser source and the light reception side pin-hole which has heretofore been difficult becomes unnecessary. As described in connection with the third embodiment shown in Figure 3, the phase modulation portion and intensity modulation portion of the object can be taken out independently of each other by changing the length L of the double mode region and the differential images thereof can also be seen. This separation of the phase information and intensity information shows the essential characteristic and usefulness of the microscope according to this embodiment of the present invention.

Also, by changing the fully coupled length of the double mode channel waveguides by the utilization of the electro-optical effect of the substrate, it becomes possible to detect the phase modulation portion and intensity modulation portion of the object independently of each other. Moreover, by combining two detecting means, it becomes possible to obtain a differential image in any direction.

Although embodiments have been described of a construction in which the double mode waveguide region is forked into a plurality of channel waveguides, the forked channel waveguides are not limited to single mode channel waveguides, but can be constructed of any channel waveguides which can direct light. In the construction of the present invention, it is possible to detect the differential information of the object to be examined by the difference signal of the quantities of light passing through the forked two channel waveguides, but of course, where a signal of the sum instead of the difference is taken, the microscope of the present invention functions as an ordinary confocal laser scanning microscope.

**Claims**

1. A confocal laser scanning differential interference contrast microscope comprising:

    a laser source (1; 21; 41; 101; 131; 147);
    optical illuminating means (2, 4; 28, 42, 43, 45; 102, 104) for condensing a light beam from said laser source and forming a light spot on an object (5; 29; 46; 105; 139) to be examined;
    optical condensing means (4; 28; 45, 47; 28; 104; 138) for condensing the light beam from said object to be examined on a detecting surface;
    a detecting device for detecting the light beam condensed on said detecting surface, the detecting device comprising light detecting means and a substrate (6; 22; 50, 60; 106, 116; 132, 148) having channel waveguide means ;
    scanning means (3; 27; 44; 103; 137) for moving said object to be examined and said light spot relative to each other; signal processing means for producing information on said object to be examined by the detection signals of said detecting means;
    characterised in that
    said channel waveguide means of said detecting device has a double mode channel waveguide (7; 25; 51, 61; 107, 117; 135, 151) which has an entrance end on said detecting surface in which an even mode and an odd mode can be excited at the wavelength of the light incident on the entrance end surface and in which the excited modes are propagable, and a waveguide fork (8; 24; 108, 118; 134, 150) at which said double mode channel waveguide forks into first and second waveguide fork branches (9, 10; 30, 31; 52, 53, 62, 63; 109, 110, 119, 120; 140, 141, 153, 154); and in that
    said detecting device includes two detecting elements (11, 12; 32, 33; 54, 55, 64, 65; 111, 112, 121, 122; 142, 143, 155, 156) for detecting light propagated through said first and second waveguide fork branches respectively, and said signal processing means includes differential means (13; 56, 66; 113, 123) for producing differential information on the object to be examined by outputting the difference between the signals from said detecting elements.

2. A confocal laser scanning differential interference contrast microscope comprising:

    a substrate (22; 132) formed with channel waveguide means thereon ;
    a laser source (21; 131) for supplying a laser beam through said channel waveguide;
    optical illuminating means (28; 146, 138) for condensing the laser beam passed through said channel waveguide to form a light spot on an object (29; 139) to be examined, and condensing light reflected from said object to be examined on an end surface (26; 136) of said channel waveguide;
    light detecting means for detecting light from said object to be examined passing through said channel waveguide;
    scanning means (27; 137) for moving said object to be examined and said light spot relative to each other; and signal processing means for producing information on said object to be examined by the detection signals of said detecting means;
    characterised in that
    said channel waveguide means comprises a double mode channel waveguide (25; 135, 151) which has an entrance end at said end surface and in which an even mode and an odd mode can be excited at the wavelength of the light incident on the end surface and the excited modes are propagable, and a waveguide fork (24; 134, 150) at which said double mode waveguide forks into first, second and third waveguide fork branches (23, 31, 32; 133, 140, 141, 149, 153, 154);

in that said light detecting means includes first and second light detecting elements (32, 33; 142, 143, 155, 156) corresponding to the outer two (30, 31; 140, 141, 153, 154) of said waveguide fork branches ; and in that said signal processing means is arranged to produce differential information (34; 144, 157) of said object from the detection signals of said detecting elements.

3. A confocal laser scanning differential interference contrast microscope according to claim 1 or claim 2, wherein the double mode channel waveguide (7; 25; 51, 61; 107, 117; 135, 151) of said channel waveguide satisfies one of the following relations:

$$L \simeq mLc \ (m = 1, 2, ...)$$
$$L \simeq Lc \ (2m + 1)/2, \ (m = 0, 1, 2, ...)$$

where L is the length of the double mode channel, and Lc is the fully coupled length, for which the phase difference between the even and the odd mode is 180°, of even and odd modes in said double mode channel.

4. A confocal laser scanning differential interference contrast microscope according to any preceding claim, wherein said substrate (6; 22; 106, 116; 132, 148) has an electro-optical effect and has an electrode (17; 35; 115, 125; 145, 158) provided on said double mode channel waveguide (7; 25; 107, 117; 135, 151).

5. A confocal laser scanning differential interference contrast microscope according to claim 4, wherein the electrode (17; 35; 115, 125; 145, 158) is connected to a voltage source whereby the fully coupled length Lc in said double mode channel waveguide (7; 25; 107, 117; 135, 151) may be varied to $Lc_1$ and $Lc_2$, the following relations being established relative to the predetermined length L of said double mode channel waveguide :

$$L \simeq mLc_1 \qquad (m = 1, 2, ...)$$

$$L \simeq Lc_2 \ (2m + 1)/2 \ (m = 0, 1, 2, ...).$$

6. A confocal laser scanning differential interference contrast microscope according to any preceding claim, wherein said substrate (6; 22; 50, 60; 106, 116; 132, 148) is a semiconductor substrate, and said light detecting elements (11, 12; 32, 33; 54, 55; 64, 65; 111, 112; 121, 122; 142, 143, 155, 156) are monolithically formed with said waveguide means on said semiconductor substrate.

**Patentansprüche**

1. Konfokales Raster-Lasermikroskop mit Kontrast durch differentielle Interferenz, umfassend:

- eine Laserquelle (1; 21; 41; 101; 131; 147);
- eine optische Beleuchtungseinrichtung (2, 4; 28, 42, 43, 45; 102, 104) zum Kondensieren eines Lichtstrahls von der Laserquelle und zum Bilden eines Lichtflecks auf einem zu untersuchenden Objekt (5; 29; 46; 105; 139);
- eine optische Kondensoreinrichtung zum Kondensieren des Lichtstrahls von dem zu untersuchenden Objekt auf eine Detektierfläche;
- eine Detektiereinrichtung zum Detektieren des auf die Detektierfläche kondensierten Lichtstrahls, wobei die Detektiereinrichtung eine Lichtdetektiereinrichtung und ein Substrat (6; 22; 50, 60; 106, 116; 132, 148) mit einer Kanalwellenleitereinrichtung aufweist;
- eine Abtasteinrichtung (3; 27; 44; 103; 137) zum Bewegen des zu untersuchenden Objekts und des Lichtflecks relativ zueinander; und
- eine Signalverarbeitungseinrichtung zum Erzeugen von Information über das zu untersuchende Objekt durch die Detektionssignale der Detektiereinrichtung;

dadurch gekennzeichnet, daß

- die Kanalwellenleitereinrichtung der Detektiereinrichtung einen Doppelmoden-Kanalwellenleiter (7; 25; 51, 61; 107, 117; 135, 151) aufweist, die ein Eintrittsende auf der Detektierfläche aufweist, in welchem ein gerader und ein ungerader Schwingungstyp bei einer Wellenlänge des auf die Eintrittsstirnfläche auftreffenden Lichts anregbar sind, und in welchen die angeregten Schwingungstypen übertragen werden können, und eine Wellenleitergabel (8; 24; 108, 118; 134, 150) aufweist, an der der Doppelmoden-Kanalwellenleiter sich aufgabelt in einen ersten und einen zweiten Wellenleitergabelzweig (9, 10; 30, 31; 52, 53, 62, 63; 109, 110, 119, 120; 140, 141, 153, 154); und daß

- die Detektiereinrichtung zwei Detektierelemente (11, 12; 32, 33; 54, 55, 64, 65; 111, 112, 121, 122; 142, 143, 155, 156) zum Detektieren von Licht aufweist, welches durch den ersten und den zweiten Wellenleitergabel übertragen wird, und die Signalverarbeitungseinrichtung einen Differenzbildner (13; 56, 66; 113, 123) aufweist, um Differenzinformation über das zu untersuchende Objekt dadurch zu erzeugen, daß die Differenz zwischen den Signalen von den Detektierelementen ausgegeben wird.

2. Konfokales Raster-Lasermikroskop mit Kontrast durch differentielle Interferenz, umfassend:

- ein Substrat (22; 132), welches mit einer Kanalwellenleitereinrichtung ausgebildet ist;
- eine Laserquelle (21; 131) zum Leiten eines Laserstrahls durch den Kanalwellenleiter;
- eine optische Beleuchtungseinrichtung (28; 146, 138) zum Kondensieren des durch den Kanalwellenleiter gelangten Laserstrahls, um auf einem zu untersuchenden Objekt (29; 139) einen Lichtfleck zu bilden, und um das von dem zu untersuchenden Objekt reflektierte Licht auf eine Stirnfläche (26; 136) des Kanalwellenleiters zu kondensieren;
- eine Lichtdetektiereinrichtung zum Detektieren von Licht, welches von dem zu untersuchenden Objekt kommt und durch den Kanalwellenleiter läuft;
- eine Abtasteinrichtung (27; 137) zum Bewegen des zu untersuchenden Objekts und des Lichtflecks relativ zueinander; und
- eine Signalverarbeitungseinrichtung zum Erzeugen von Information über das zu untersuchende Objekt durch die Detektiersignale von der Detektiereinrichtung;

dadurch gekennzeichnet, daß

- die Kanalwellenleitereinrichtung einen Doppelmoden-Kanalwellenleiter (25; 135, 151) aufweist, der ein Eintrittsende an der Stirnfläche aufweist, und in dem ein gerader und ein ungerader Schwingungstyp bei einer Wellenlänge des Lichts anregbar sind, welches auf die Stirnfläche auftrifft, und in welchem die angeregten Schwingungstypen übertragen werden können, und eine Wellenleitergabel (24; 134, 150) besitzt, an der sich der Doppelmoden-Wellenleiter in einen ersten, einen zweiten und einen dritten Wellenleitergabelzweig (23, 31, 32; 133, 140, 141, 149, 153, 154) aufgabelt;
- daß die Lichtdetektiereinrichtung ein erstes und ein zweites Lichtdetektierelement (32, 33; 142, 143, 155, 156) enthält, die den beiden äußeren (30, 31; 140, 141, 153, 154) der Kanalwellenleitergabelzweige entsprechen; und
- daß die Signalverarbeitungseinrichtung derart ausgebildet ist, daß sie Differenzinformation (34; 144, 157) über das Objekt aus den detektierten Signalen von den Detektierelementen bildet.

3. Konfokales Raster-Lasermikroskop mit Kontrast durch differentielle Interferenz nach Anspruch 1 oder 2, bei dem der Doppelmoden-Kanalwellenleiter (7; 25; 51, 61; 107, 117; 135, 151) des Kanalwellenleiters eine der folgenden Relationen erfüllt:

$$L = mLc \qquad (m = 1, 2, \ldots)$$
$$L = Lc \ (2 m + 1)/2, \qquad (m = 0, 1, 2, \ldots)$$

wobei L die Länge des Doppelmodenkanals und Lc die vollständig gekoppelte Länge der geraden und ungeraden Schwingungstypen in dem Doppelmodenkanal ist, für die die Phasendifferenz zwischen den geraden und ungeraden Schwingungstypen 180° beträgt.

4. Raster-Lasermikroskop nach einem vorhergehenden Anspruch, bei dem das Substrat (6; 22; 106, 116; 132, 148) einen elektrooptischen Effekt aufweist und eine Elektrode (17; 35; 115, 125; 145, 158) besitzt, die auf dem Doppelmoden-Kanalwellenleiter (7; 25; 107, 117; 135, 151) vorgesehen ist.

5. Konfokales Raster-Lasermikroskop nach Anspruch 4, bei dem die Elektrode (17; 35; 115, 125; 145, 158) mit einer Spannungsquelle verbunden ist, wobei die vollständig gekoppelte Länge Lc des Doppelmoden-Kanalwellenleiters (7; 25; 107, 117; 135, 151) auf $Lc_1$ und $Lc_2$ variiert werden kann, wobei die folgenden Relationen bezüglich der vorbestimmten Länge L des Doppelmoden-Kanalwellenleiters geschaffen werden:

$$L = mLc_1 \qquad (m = 1, 2, \ldots)$$

$$L = Lc_2 \ (2m + 1)/2 \qquad (m = 0, 1, 2, \ldots).$$

**6.** Konfokales Raster-Lasermikroskop nach einem vorhergehenden Anspruch, bei dem das Substrat (6; 22; 50, 60; 106, 116; 132, 148) ein Halbleitersubstrat ist und die Lichtdetektierelemente (11, 12; 32, 33; 54, 55, 64, 65; 111, 112, 121, 122; 142, 143, 155, 156) mit der Wellenleitereinrichtung monolithisch auf dem Halbleitersubstrat ausgebildet sind.

**Revendications**

**1.** Microscope à foyer commun et à balayage laser en contraste interférentiel de type différentiel comprenant :

une source laser (1; 21; 41; 101; 131; 147),
des moyens d'éclairage optiques (2, 4; 28, 42, 43, 45; 102, 104) pour condenser un faisceau lumineux provenant de ladite source laser et former un spot lumineux sur un objet à examiner (5; 29; 46; 105; 139),
des moyens de condensation optiques (4; 28; 45, 47; 28; 104; 138) pour condenser le faisceau lumineux provenant dudit objet à examiner sur une surface de détection,
un dispositif de détection pour détecter le faisceau lumineux condensé sur ladite surface de détection, le dispositif de détection comprenant des moyens photodétecteurs et un substrat (6; 22; 50, 60; 106, 116; 132, 148) ayant des moyens guides d'ondes canalisés,
des moyens de balayage (3; 27; 44; 103; 137) pour déplacer ledit objet à examiner et ledit spot lumineux l'un par rapport à l'autre, et
des moyens de traitement de signaux pour produire des informations sur ledit objet à examiner par les signaux de détection desdits moyens de détection,
caractérisé en ce que
lesdits moyens guides d'ondes canalisés dudit dispositif de détection ont un guide d'ondes canalisé à mode double (7; 25; 51; 61; 107, 117; 135, 151), qui a une extrémité d'entrée sur ladite surface de détection, dans lequel un mode pair et un mode impair peuvent être excités à la longueur d'onde de la lumière tombant sur la surface de l'extrémité d'entrée et dans lequel les modes excités peuvent être propagés, et un embranchement de guide d'ondes (8; 24; 108; 118; 134, 150) dans lequel ledit guide d'ondes canalisé à mode double se divise en une première et une deuxième branches de guide d'ondes (9, 10; 30, 31; 52, 62, 63; 109, 110, 119, 120; 140, 141, 153, 154), et en ce que
ledit dispositif de détection comprend deux éléments de détection (11, 12; 32, 33; 54, 55, 64, 65; 111, 112, 121, 122; 142, 143, 155, 156) pour détecter la lumière propagée à travers la première et la deuxième branches du guide d'ondes de l'embranchement, respectivement, et
lesdits moyens de traitement de signaux comprennent des moyens différentiels (13; 56; 66; 113, 123) pour produire des informations différentielles sur l'objet à examiner en délivrant la différence entre les signaux à partir desdits éléments de détection.

**2.** Microscope à foyer commun et à balayage laser en contraste interférentiel de type différentiel, comprenant :

un substrat (22; 132) avec des moyens guides d'ondes canalisés,
une source laser (21; 131) pour fournir un faisceau laser à travers ledit guide d'ondes canalisé,
des moyens d'éclairage optiques (28; 146, 138) pour condenser le faisceau laser envoyé à travers ledit guide d'ondes canalisé pour former un spot lumineux sur un objet à examiner (29; 139), et pour condenser la lumière réfléchie par ledit objet à examiner sur une surface terminale (26; 136) dudit guide d'ondes canalisé,
des moyens photodétecteurs pour détecter la lumière provenant dudit objet à examiner et passant à travers ledit guide d'ondes canalisé,
des moyens de balayage (27; 137) pour déplacer ledit objet à examiner et ledit spot lumineux l'un par rapport à l'autre, et
des moyens de traitement de signaux pour produire des informations sur ledit objet à examiner par les signaux de détection desdits moyens de détection,
caractérisé en ce que
lesdits moyens guides d'ondes comprennent un guide d'ondes canalisé à mode double (25; 135, 151) qui a une extrémité d'entrée sur ladite surface terminale et dans lequel un mode pair et un mode impair peuvent être excités à la longueur d'onde de la lumière tombant sur la surface terminale et les modes excités peuvent être propagés, et un embranchement de guide d'ondes (24; 134, 150) dans lequel ledit guide d'ondes à mode double se partage en une première, une deuxième et une troisième branches de guide d'ondes (23, 31, 32; 133, 140, 141, 149, 153, 154),
en ce que lesdits moyens photodétecteurs comprennent un premier et un deuxième éléments photodétecteurs;

(32, 33; 142, 143, 155, 156) correspondant aux deux guides d'ondes externes (30, 31; 140, 141, 153, 154) desdites branches du guide d'ondes canalisé, et

en ce que lesdits moyens de traitement de signaux sont agencés pour produire des informations différentielles (34; 144, 157) sur ledit objet à partir des signaux de détection desdits éléments de détection.

3. Microscope à foyer commun et à balayage laser en contraste interférentiel de type différentiel selon la revendication 1 ou 2, dans lequel le guide d'ondes canalisé à mode double (7; 25; 51, 61; 107, 117; 135, 151) dudit guide d'ondes canalisé satisfait à l'une des relations suivantes :

$$L = mLc \qquad (m = 1, 2, ...)$$
$$L = Lc \ (2m + 1)/2, \qquad (m = 0, 1, 2, ...)$$

dans lesquelles L est la longueur du canal à mode double et Lc est la longueur complètement couplée, pour laquelle la différence de phase entre les mode pair et impair est de 180°, de modes pair et impair dudit canal à mode double.

4. Microscope à foyer commun et à balayage laser en contraste interférentiel de type différentiel selon l'une quelconque des revendications précédentes, dans lequel ledit substrat (6; 22; 106, 116; 132, 148) a un effet électro-optique et a une électrode (17; 35; 115, 125; 145, 158) prévue sur le guide d'ondes canalisé à double mode (7; 25; 107, 117; 135, 151).

5. Microscope à foyer commun et à balayage laser en contraste interférentiel de type différentiel selon la revendication 4, dans lequel l'électrode (17; 35; 115, 125; 145, 158) est connectée à une source de tension par laquelle la longueur complète couplée Lc dudit guide d'ondes à mode double (7; 25; 107, 117; 135, 151) peut être modifiée à $Lc_1$ et $Lc_2$, les relations suivantes étant établies par rapport à la longueur prédéterminée L dudit guide d'ondes canalisé à mode double:

$$L = mLc_1 \qquad (m = 1, 2, ...)$$

$$L = Lc_1 \ (2m + 1)/2 \qquad (m = 0, 1, 2, ...)$$

6. Microscope à foyer commun et à balayage laser en contraste interférentiel de type différentiel selon l'une quelconque des revendications précédentes, dans lequel ledit substrat (6; 22; 50, 60; 106, 116; 132, 148) est un substrat à semi-conducteur, et lesdits éléments photodétecteurs (11, 12; 32, 33; 54, 55, 64, 65; 111, 112; 121, 122; 142, 143, 155, 156) sont formés de manière monolithique avec lesdits moyens guide d'ondes sur ledit substrat à semi-conducteur.

# F I G. 1

# F I G. 2

# F I G. 3

# F I G. 4

# F I G. 5

# F I G. 6

# FIG. 7